(19) Europäisches Patentamt / European Patent Office / Office européen des brevets

(11) **EP 4 439 712 A1**

(12) **EUROPEAN PATENT APPLICATION**
published in accordance with Art. 153(4) EPC

(43) Date of publication:
**02.10.2024 Bulletin 2024/40**

(21) Application number: **22899129.5**

(22) Date of filing: **28.11.2022**

(51) International Patent Classification (IPC):
$H01M\ 4/36$ (2006.01)    $H01M\ 4/38$ (2006.01)
$H01M\ 4/587$ (2010.01)    $H01M\ 4/13$ (2010.01)
$H01M\ 10/052$ (2010.01)    $H01M\ 10/0562$ (2010.01)
$H01M\ 4/02$ (2006.01)

(52) Cooperative Patent Classification (CPC):
H01M 4/02; H01M 4/13; H01M 4/36; H01M 4/38;
H01M 4/587; H01M 10/052; H01M 10/0562;
Y02E 60/10

(86) International application number:
**PCT/KR2022/018989**

(87) International publication number:
**WO 2023/096447 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 JP 2021192390**
**14.11.2022 JP 2022181961**

(71) Applicants:
• **Samsung SDI Co., Ltd.**
**Yongin-si, Gyeonggi-do 17084 (KR)**
• **Asahi Carbon Co., Ltd.**
**Niigata-shi, Niigata 950-0883 (JP)**

(72) Inventors:
• **SUZUKI, Naoki**
**Yokohama-shi, Kanagawa 230--0027 (JP)**
• **FUJIKI, Satoshi**
**Yokohama-shi, Kanagawa 230--0027 (JP)**
• **ARIMITSU, Nozomi**
**Niigata-shi, Niigata 950--0883, Japan (JP)**
• **YAMAGUCHI, Togo**
**Niigata-shi, Niigata 950--0883, Japan (JP)**

(74) Representative: **Gulde & Partner**
**Patent- und Rechtsanwaltskanzlei mbB**
**Wallstraße 58/59**
**10179 Berlin (DE)**

(54) **ANODE MATERIAL FOR SECONDARY BATTERY, ANODE LAYER FOR SECONDARY BATTERY, SOLID SECONDARY BATTERY, AND CHARGING METHOD THEREFOR**

(57) Provided is a solid secondary battery capable of more suppressing a short circuit due to generation or growth of dendrites than in the prior art. The anode material comprises amorphous carbon and a first element that forms an alloy with lithium by an electrochemical reaction, wherein the amorphous carbon is carbon black, primary particles of the carbon black are porous, and a value of an average primary particle diameter (cm) x a nitrogen adsorption specific surface area ($cm^2/g$) is greater than or equal to 5 and less than or equal to 35.

FIG. 1

EP 4 439 712 A1

**Description**

**[Technical Field]**

The present invention relates to an anode material for a secondary battery, an anode layer for a secondary battery, a solid secondary battery, and a charging method therefor.

**[Background Art]**

Examples of solid secondary batteries using lithium as an anode active material may include batteries using lithium precipitated in an anode layer by charging the batteries as the active material. In such solid secondary batteries, the lithium precipitated at an anode sometimes grows into a tree-like shape as if escaping through gaps of a solid electrolyte layer (so-called lithium dendrite), which may not only cause a short circuit of the batteries but also deteriorate battery capacity.

Accordingly, as solid secondary batteries capable of suppressing generation or growth of lithium dendrite in the solid electrolyte layer, Japanese Patent Laid-Open Publication No. 2019-096610 has been considered. The all-solid-state secondary batteries described in Japanese Patent Laid-Open Publication No. 2019-096610 use amorphous carbon as an anode active material and an element forming an alloy or a compound with the lithium. If such batteries are charged, the lithium is intercalated in an anode active material layer formed by the aforementioned anode active material at the beginning of the charging, and after exceeding charging capacity of the anode active material layer, the lithium may be precipitated inside the anode active material layer or at the rear side (at the current collector side) of the anode active material layer. As a result, the generation or growth of the lithium dendrite in the solid electrolyte layer may be suppressed, resultantly suppressing the short circuit and the deterioration of battery capacity.

**[Disclosure]**

[Technical Problem]

In order to further suppress the generation and growth of lithium dendrites, as a result of repeated studies, it has been discovered that short circuits in solid secondary batteries can be further suppressed by adjusting the porosity of amorphous carbon used as an anode active material within a predetermined range.

[Technical Solution]

The anode material for a secondary battery according to the present invention includes amorphous carbon and a first element that forms an alloy with lithium by an electrochemical reaction, wherein the amorphous carbon is porous carbon black, and a value of an average primary particle diameter (cm) $\times$ a nitrogen adsorption specific surface area ($cm^2/g$) is greater than or equal to 5 and less than or equal to 35.

On the other hand, whether an element forms an alloy or compound with lithium through an electrochemical reaction can be determined, for example, by performing the following experiment. First, using Li metal foil as the counter electrode and 10 mg of powder mixed with a powder of the target element and a powder of the solid electrolyte at a weight ratio of 1:1 as the working electrode, CC-CV charging is performed from OCV (open circuit voltage) to 0.01 V. When the target element forms an alloy or compound with lithium, a capacity of hundreds to thousands of mAh/g per weight of the target element is observed. On the other hand, when no alloy or compound is formed, almost no capacity is observed.

According to the anode material for secondary batteries constructed in this way, short circuits in solid secondary batteries can be suppressed further than in the prior art.

In order to exert a more effective short circuit suppression effect, it is desirable that the carbon black further satisfies the following conditions (1) and (2).

(1) An average primary particle diameter of the carbon black is greater than or equal to 10 nm and less than or equal to 80 nm.
(2) An aggregate diameter of the carbon black is greater than or equal to 50 nm and less than or equal to 300 nm.
It is more desirable that the carbon black satisfies the following conditions (3) and (4) in addition to the above-mentioned (1) and (2).
(3) An oil absorption amount of the carbon black is greater than or equal to 200 ml/100 g and less than or equal to 350 ml/100 g.
(4) A total pore volume of the carbon black is greater than or equal to 0.5 ml/g and less than or equal to 3 ml/g.

As the carbon black, it is particularly desirable to use furnace black.

If a total content of the amorphous carbon and the first element included in the anode material for a secondary battery is 100 parts by weight, a content of the amorphous carbon is desirably greater than or equal to 33 parts by weight and less than or equal to 95 parts by weight.

In specific embodiments, the first element may be silver or zinc.

In order to reduce the manufacturing cost of a solid secondary battery, the anode material for the secondary battery may include a second element that does not form an alloy with lithium through an electrochemical reaction.

As a specific embodiment of the present invention, when a content of the amorphous carbon included in the anode material for a secondary battery is 100 parts by weight, a content of the second element is desirably greater than or equal to 16 parts by weight and less than or equal to 100 parts by weight.

In order to reduce the manufacturing cost of the solid secondary battery and improve the battery characteristics of the solid secondary battery beyond conventional ones, the second element may be iron or nickel.

If the anode includes a plate-shaped current collector and an anode active material layer made of the anode material for a secondary battery on the current collector, and the anode active material layer is formed on the current collector in a range of 0.3 mg to 2 mg per 1 $cm^2$, short circuits in solid secondary batteries may be further suppressed.

In a specific embodiment, a solid secondary battery includes a cathode layer, an anode layer, and a solid electrolyte layer between the cathode layer and the anode layer, wherein the anode layer includes the aforementioned anode active material, and an initial charging capacity of the cathode layer and the initial charging capacity of the anode layer satisfy Equation 1.

$$[Equation\ 1]$$

$$0.01<b/a<0.5$$

In Equation 1, a represents the charging capacity (mAh) of the cathode layer, and b represents the charging capacity (mAh) of the anode layer.

[Advantageous Effects]

As described above, short circuits in solid secondary batteries can be suppressed further than in the prior art.

**[Description of the Drawings]**

FIG. 1 is a cross-sectional view showing a schematic configuration of an all-solid-state secondary battery according to an embodiment.

FIG. 2 is a cross-sectional view showing a schematic configuration of an all-solid-state secondary battery according to another embodiment.

FIG. 3 is a cross-sectional view schematically showing the configuration of a case in which a lithium metal layer is precipitated in an all-solid-state secondary battery according to an embodiment.

FIG. 4 is a cross-sectional view schematically showing the configuration of a case in which a lithium metal layer is precipitated in an all-solid-state secondary battery according to an embodiment.

FIG. 5 is a cross-sectional view showing a schematic configuration of an all-solid-state secondary battery according to another embodiment.

**[Mode for Invention]**

Embodiments will be described in detail below with reference to the accompanying drawings. Meanwhile, in this specification and drawings, components having substantially the same functional structure are given the same reference numerals, thereby omitting redundant description.

<1. Basic Configuration of Solid Secondary Battery According to an Embodiment >

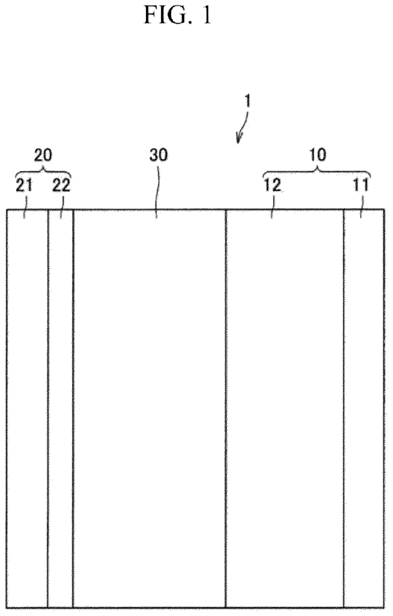

The solid secondary battery 1 according to this embodiment is an all-solid secondary battery including an anode layer 10, a cathode layer 20, and a solid electrolyte layer 30, as shown in FIG. 1.

(1-1. Cathode Layer)

The cathode layer 10 includes a cathode current collector 11 and a cathode active material layer 12. The cathode current collector 11 may be plate-shaped or thin-shaped bodies made of indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The cathode current collector 11 may be omitted.

The cathode active material layer 12 includes a cathode active material and a solid electrolyte. Meanwhile, the solid electrolyte included in the cathode layer 10 may be of the same type as the solid electrolyte included in the solid electrolyte layer 30, or may not be of the same type. Details of the solid electrolyte are described in detail in the description of the solid electrolyte layer 30.

The cathode active material may be any cathode active material capable of reversibly intercalating and deintercalating lithium ions.

For example, the cathode active material may include a lithium salt such as lithium cobalt oxide (hereinafter referred to as "LCO"), lithium nickel oxide, lithium nickel cobalt oxide, and lithium nickel cobalt aluminate (hereinafter referred to as "NCA"), lithium nickel cobalt manganate (hereinafter referred to as "NCM"), lithium manganate, lithium iron phosphate; nickel sulfide, copper sulfide, lithium sulfide, sulfur, iron oxide; vanadium oxide or the like. These cathode active materials may be used alone, respectively, and may be used in combination of two or more.

In addition, the cathode active material may be formed by including a lithium salt of a transition metal oxide having a layered rock salt structure among the aforementioned lithium salts. Herein, the "layered rock salt structure" is a structure in which oxygen atomic layers and metal atomic layers are alternately arranged in the <111> direction of the cubic rock salt structure, and as a result, each atomic layer forms a two-dimensional plane. In addition, "cubic rock salt structure" refers to a sodium chloride type structure, which is one type of crystal structure, and specifically, a structure in which the face-centered cubic lattice formed by each of the cations and anions is arranged with a shift of only 1/2 of the corners of the unit lattice from each other.

Examples of the lithium salt of the transition metal oxide having such a layered rock salt structure may include lithium salts of ternary transition metal oxides such as $LiNi_xCo_yAl_zO_2$ (NCA) or $LiNi_xCo_yMn_zO_2$ (NCM) ($0<x<1$, $0<y<1$, $0<z<1$, and $x+y+z=1$).

If the cathode active material includes a lithium salt of a ternary transition metal oxide having the aforementioned layered rock salt structure, the energy density and thermal stability of the all-solid-state secondary battery 1 may be improved.

The cathode active material may be covered with a coating layer. Herein, the coating layer of this embodiment may be any as long as it is a well-known coating layer of the cathode active material of an all-solid-state secondary battery. Examples of the coating layer may include $Li_2O-ZrO_2$, and the like.

In addition, when the cathode active material is formed from a lithium salt of a ternary transition metal oxide such as NCA or NCM, and nickel (Ni) is included as the cathode active material, capacity density of the all-solid-state secondary battery 1 is increased, and metal elution from the cathode active material in a charged state may be reduced. Accordingly, the all-solid-state secondary battery 1 according to the present embodiment may improve long-term reliability and cycle characteristics in a charged state.

Herein, the cathode active material may have a shape of a particle, such as a regular spherical shape and an ellipsoidal shape. In addition, the particle diameter of the cathode active material is not particularly limited, and may be within a range applicable to the cathode active material of a conventional all-solid-state secondary battery. On the other hand, a content of the cathode active material in the cathode layer 10 is also not particularly limited, as long as it is within a range applicable to the cathode layer 10 of a conventional all-solid secondary battery.

Further, in the cathode layer 10, in addition to the aforementioned cathode active material and solid electrolyte, for example, additives such as a conductive auxiliary agent, a binder, a filler, a dispersant, or an ion conductive auxiliary agent may be suitably blended.

Examples of the conductive auxiliary agent that may be blended in the cathode layer 10 may include graphite, carbon black, acetylene black, ketjen black, a carbon fiber, and a metal powder. In addition, the binder that may be blended in cathode layer 10 may include, for example, a styrene butadiene rubber (SBR), polytetrafluoroethylene, polyvinylidene fluoride, polyethylene, and the like. In addition, as the filler, the dispersant, the ion conductive auxiliary agent, etc. which may be blended in the cathode layer 10, well-known materials which can generally be used for the electrode of an all-solid-state secondary battery may be used.

The cathode layer 10 may include a liquid electrolyte solution. In this case, the cathode layer 10 does not need to include a solid electrolyte. The electrolyte solution may be of any type as long as it can be used in lithium ion batteries. By using the cathode layer 10 including an electrolyte solution, ion conduction between cathode active material particles becomes easy and output is improved. However, when the cathode layer 10 includes an electrolyte solution, the solid electrolyte layer 30 should prevent the electrolyte solution from entering the anode side.

(1-2. Anode Layer)

The anode layer 20 includes an anode current collector 21 and an anode active material layer 22. The anode current collector 21 may be made of a material that does not react with lithium, that is, does not form any alloy or compound. The material constituting the anode current collector 21 may include, for example, copper (Cu), stainless steel, titanium (Ti), iron (Fe), cobalt (Co), and nickel (Ni). The anode current collector 21 may be made of any one of these metals, or may be made of an alloy of two or more metals or a clad material. The anode current collector 21 is, for example, plate-shaped or thin-shaped.

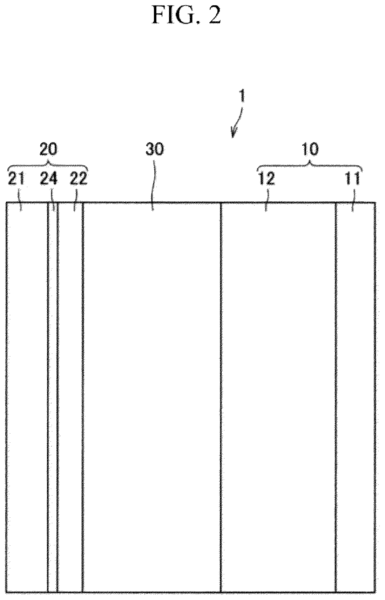

Herein, as shown in FIG. 2, a thin film 24 may be formed on the surface of the anode current collector 21. The thin film 24 includes an element capable of forming an alloy with lithium. Examples of the element may include gold, silver, zinc, tin, indium, silicon, aluminum, and bismuth. The thin film 24 may be made of any one of these metals, or may be made of multiple types of alloys. Due to the presence of the thin film 24, the precipitated form of the metal layer 23 becomes flatter, and the characteristics of the all-solid-state secondary battery 1 are further improved.

Herein, a thickness of the thin film 24 is not particularly limited, but may be greater than or equal to 1 nm and less than or equal to 500 nm. If the thickness of the thin film 24 is less than 1 nm, there is a possibility that the function of the thin film 24 cannot be sufficiently exercised. If the thickness of the thin film 24 exceeds 500 nm, the amount of lithium deposited on the anode is reduced due to lithium intercalation in the thin film 24 itself, and there is a possibility that the characteristics of the all-solid-state secondary battery 1 may actually deteriorate. The thin film 24 is formed on the anode current collector 21 by, for example, vacuum deposition, sputtering, or plating.

The anode active material layer 22 includes an anode active material that forms an alloy or compound with lithium. A ratio of the charging capacity of the cathode active material layer 12 and the charging capacity of the anode active material layer 22, that is, the capacity ratio, satisfies Equation 1:

$$[\text{Equation 1}]$$

$$0.01 < b/a < 0.5$$

In Equation 1, a represents the charging capacity (mAh) of the cathode active material layer 12, and b represents the charging capacity (mAh) of the anode active material layer 22.

Herein, the charging capacity of the cathode active material layer 12 is obtained by multiplying a charging capacity density (mAh/g) of the cathode active material by a mass of the cathode active material in the cathode active material layer 12. When multiple types of cathode active materials are used, a value of charging capacity density x mass is obtained and a total of these values can be taken as the charging capacity of the cathode active material layer 12. The charging capacity of the anode active material layer 22 is also calculated in the same way. That is, the charging capacity of the anode active material layer 22 is obtained by multiplying a charging capacity density (mAh/g) of the anode active material by a mass of the anode active material in the anode active material layer 22. When multiple types of anode active materials are used, a value of charging capacity density x mass is obtained and a total of these values can be taken as the charging capacity of the anode active material layer 22. Herein, the charging capacity densities of the cathode and anode active materials are capacities estimated using an all-solid-state half-cell using lithium metal as the counter electrode. In reality, the charging capacity of the cathode active material layer 12 and the anode active material layer 22 is directly measured by measurement using an all-solid-state half-cell.

Specific methods for directly measuring charging capacity include the following methods. First, the charging capacity of the cathode active material layer 12 is determined by manufacturing a test cell using the cathode active material layer 12 as the working electrode and Li as the counter electrode, and performing CC-CV charging from OCV (open circuit voltage) to the upper limit charging voltage. The upper limit charging voltage is defined in the standard of JIS C 8712:2015, and the upper limit charging voltage may be 4.25 V for lithium cobaltate-based cathodes and may be required voltages for other cathodes, by applying the provisions of A.3.2.3 (Safety requirements when applying different upper limit charging voltages) of JIS C 8712:2015. The charging capacity of the anode active material layer 22 is measured by manufacturing a test cell using the anode active material layer 22 as the working electrode and Li as the counter electrode, and performing CC-CV charging from OCV (open circuit voltage) to 0.01 V.

The test cell described above can be manufactured, for example, in the following manner. The cathode active material layer 12 or the anode active material layer 22 whose charging capacity is to be measured is drilled into a disk shape with a diameter of 13 mm. 200 g of the same solid electrolyte powder used in the all-solid-state secondary battery 1 is solidified at 40 MPa and formed into a pellet with a diameter of 13 mm and a thickness of about 1 mm. This pellet is placed inside a container with an inner diameter of 13 mm, a cathode active material layer 12 or an anode active material layer 22 pierced in a disk shape is placed from one side, and a lithium foil with a diameter of 13 mm and a thickness of 0.03 mm is placed on the other side. In addition, one stainless steel disc is placed on each side, and the entire contents are unified by pressurizing the entire cylinder in the axial direction at 300 MPa for 1 minute. The integrated contents are taken out of the container, placed in a case so that a pressure of 22 MPa is always applied, and sealed to form a test cell. The charging capacity of the cathode active material layer 12 can be measured by, for example, CC charging the test cell manufactured as described above at a current density of 0.1 mA and then CV charging it up to 0.02 mA.

By dividing this charging capacity by the mass of each active material, the charging capacity density is calculated. The initial charge capacities of the cathode active material layer 12 and the anode active material layer 22 may be the initial charge capacities measured during the first cycle of charging. In Examples described later, these values are used.

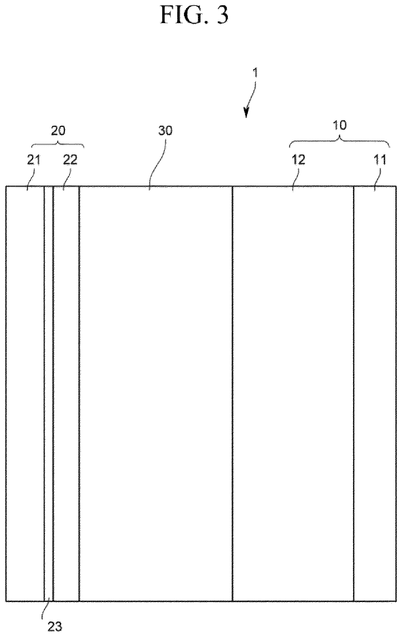

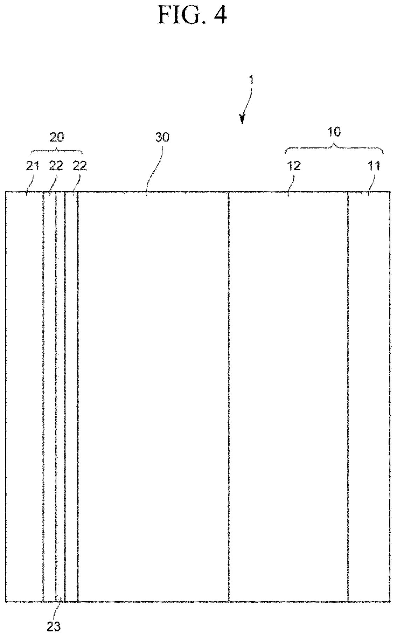

In this way, the charging capacity of the cathode active material layer 12 becomes excessive compared to the charging capacity of the anode active material layer 22. As will be described later, in this embodiment, the all-solid-state secondary battery 1 is charged beyond the charging capacity of the anode active material layer 22. In other words, the anode active material layer 22 is overcharged. At the beginning of charging, lithium is stored in the anode active material layer 22. That is, the anode active material forms an alloy or compound with lithium ions that have migrated from the cathode layer 10. If further charging exceeds the capacity of the anode active material layer 22, as shown in FIG. 3, on the rear side of the anode active material layer 22, that is, between the anode current collector 21 and the anode active material layer 22, becomes charged, lithium precipitates, and the metal layer 23 is formed by this lithium. The metal layer 23 may be formed inside the anode active material layer 22, for example, as shown in FIG. 4. In other words, the metal layer 23 may be formed by sandwiching the anode active material layer 22 divided into two sheets. The metal layer 23 is mainly composed of lithium (i.e., metallic lithium). This phenomenon occurs when the anode active material includes a specific material, that is, an element that forms an alloy or compound with lithium. During discharge, lithium in the anode active material layer 22 and the metal layer 23 is ionized and moves toward the cathode layer 10. Therefore, in the all-solid-state secondary battery 1, lithium can be used as an anode active material. Additionally, because the anode active material layer 22 covers the metal layer 23, it functions as a protective layer for the metal layer 23 and can suppress precipitation and growth of dendrites. Accordingly, short circuit and capacity reduction of the all-solid-state secondary battery 1 are suppressed, and further, the characteristics of the all-solid-state secondary battery 1 are improved.

Here, a capacity ratio is greater than 0.01. If the capacity ratio is less than or equal to 0.01, the characteristics of the all-solid-state secondary battery 1 deteriorate. One reason for this is that the anode active material layer 22 does not function sufficiently as a protective layer. For example, if the thickness of the anode active material layer 22 is very thin, the capacity ratio may be less than or equal to 0.01. In this case, there is a possibility that the anode active material layer 22 collapses and dendrites precipitate and grow due to repeated charging and discharging. As a result, the characteristics of the all-solid-state secondary battery 1 deteriorate. Moreover, it is desirable that the capacity ratio is less than 0.5. If the capacity ratio is greater than or equal to 0.5, the amount of lithium precipitation in the anode decreases, and the battery capacity decreases. For the same reason, it is considered more desirable that the capacity ratio is less than 0.25. In addition, when the capacity ratio is less than 0.25, the output characteristics of the battery can be further improved.

Examples of the anode active material layer 22 for realizing the above-described function include those including amorphous carbon and a first element as the anode active material.

As the amorphous carbon, it is desirable to use carbon black. Examples of carbon black may include acetylene black, furnace black, and ketjen black.

The first element is an element that forms an alloy or compound with lithium, and specifically includes one or more types selected from gold, platinum, palladium, silver, and zinc.

When using any one or more of gold, platinum, palladium, silver, and zinc as the first element, these anode active materials are, for example, in the form of particles, and the particle size thereof may be less than or equal to 4 μm, and more specifically less than or equal to 300 nm. In this case, the characteristics of the all-solid-state secondary battery 1 are further improved. Herein, the particle size of the anode active material may be, for example, a median diameter (so-called $D_{50}$) measured using a laser particle size distribution meter. In the following Examples and Comparative Examples, the particle size is measured using this method. The lower limit of the particle size is not particularly limited, but may be 10 nm.

The anode active material layer 22 may further include a second element that does not form an alloy or compound with lithium.

The second element may be an element belonging to the fourth period of the periodic table of elements, and may also be an element belonging to Groups 3 to 11. More specifically, the second element may be one or more types selected from iron, copper, nickel, and titanium, and may be any one of these elements, or may be used in a combination of multiple types of these elements.

These second element may desirably be in the form of particles, and the desirable average primary particle diameter varies depending on each element, but is desirably greater than or equal to 65 nm and less than or equal to 800 nm.

A content of amorphous carbon included in the anode active material layer 22 may be greater than or equal to 33 parts by weight and less than or equal to 95 parts by weight when the content of the anode active material (in the case of this embodiment, a total content of amorphous carbon and the first element) is 100 parts by weight.

If the content of amorphous carbon included in the anode active material layer 22 is 100 parts by weight, the first element may be greater than or equal to 10 parts by weight and less than or equal to 25 parts by weight, and may be greater than or equal to 15 parts by weight and less than or equal to 20 parts by weight.

The content of the second element is more desirably greater than or equal to 16 parts by weight and less than or equal to 100 parts by weight when the content of amorphous carbon contained in the anode active material layer 22 is 100 parts by weight.

Additionally, the anode active material layer 22 may include a binder. Examples of such a binder include a styrene butadiene rubber (SBR), polytetrafluoroethylene, polyvinylidene fluoride, and polyethylene. The binder may be composed of one type of these, or may be composed of two or more types.

By including a binder in the anode active material layer 22, the anode active material layer 22 can be stabilized on the anode current collector 21. For example, if a binder is not included in the anode active material layer 22, there is a possibility that the anode active material layer 22 may easily separate from the anode current collector 21. At locations where the anode active material layer 22 separates from the anode current collector 21, the anode current collector 21 is exposed, and thus there is a possibility that a short circuit may occur. As will be described in detail later, the anode active material layer 22 is manufactured by applying a slurry in which the material constituting the anode active material layer 22 is dispersed onto the anode current collector 21 and drying it. By including a binder in the anode active material layer 22, the anode active material can be stably dispersed in the slurry described above. As a result, when the slurry is applied onto the anode current collector 21 by, for example, screen printing, clogging to the screen (for example, clogging by aggregates of the anode active material) can be suppressed.

Herein, if a binder is included in the anode active material layer 22, a content of the binder may desirably be greater than or equal to 0.3 parts by weight and less than or equal to 15 parts by weight when the total mass of the anode active material is 100 parts by weight. If a binder content is greater than or equal to 0.3 parts by weight, the strength of the film becomes sufficient and deterioration of properties can be suppressed. If the binder content is less than or equal to 20 parts by weight, deterioration in the characteristics of the all-solid-state secondary battery 1 can be suppressed. The desirable lower limit of the binder content is 1 part by weight.

A thickness of the anode active material layer 22 is not particularly limited as long as it satisfies the requirements of Equation 1, but is desirably greater than or equal to 1 $\mu$m and less than or equal to 20 $\mu$m. If the thickness of the anode active material layer 22 is less than 1 $\mu$m, characteristics of the all-solid-state secondary battery 1 may not be sufficiently improved. If the thickness of the anode active material layer 22 exceeds 20 $\mu$m, the resistance value of the anode active material layer 22 increases, and as a result, characteristics of the all-solid-state secondary battery 1 may not be sufficiently improved.

The thickness of the anode active material layer 22 can be estimated, for example, by assembling an all-solid-state secondary battery and observing a cross-section after pressure forming with a scanning electron microscope (SEM).

In the anode active material layer 22, additives used in conventional all-solid-state secondary batteries, such as fillers, dispersants, and ion conductive agents may be appropriately blended.

(1-3. Solid Electrolyte Layer)

The solid electrolyte layer 30 is formed between the anode layer 10 and the cathode layer 20 and includes a solid electrolyte.

The solid electrolyte may be composed of, for example, a sulfide-based solid electrolyte material or an oxide-based solid electrolyte. The sulfide-based solid electrolyte material may include, for example, $Li_2S-P_2S_5$, $Li_2S-P_2S_5-LiX$ (wherein, X is a halogen element, for example I, or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2Ss-LiI$, $Li_2S-B_2S_3$, $Li_2S-P_2S_5-Z_mS_n$ (wherein, m and n are a positive number and Z is Ge, Zn, or Ga), $Li_2S-GeS_2$, $Li_2S-SiS_2-Li_3PO_4$, $Li_2S-SiS_2-Li_pMO_q$ (p and q are a positive number and M is any one of P, Si, Ge, B, Al, Ga, or In). Herein, the sulfide-based solid electrolyte material may be produced by treating a starting raw material (e.g., $Li_2S$, $P_2S_5$, etc.) by a melt quenching method, a mechanical milling method, or the like. Moreover, heat treatment may be further performed. The solid electrolyte may be amorphous or crystalline, or may be in a mixed state thereof.

In addition, the solid electrolyte may be one containing at least sulfur (S), phosphorus (P) and lithium (Li) as constituent elements among the above sulfide solid electrolyte materials, and in particular, desirably, one containing $Li_2S-P_2S_5$.

Herein, when using one containing $Li_2S-P_2S_5$ as the sulfide-based solid electrolyte material forming the solid electrolyte, a mixing mole ratio of $Li_2S$ and $P_2S_5$ may be, for example, in the range of $Li_2S:P_2S_5$ = about 50:50 to about 90:10. In addition, the solid electrolyte layer 30 may further include a binder. The binder included in the solid electrolyte layer 30 may include, for example, a styrene butadiene rubber (SBR), polytetrafluoroethylene, polyvinylidene fluoride, polyethylene, etc. The binder in the solid electrolyte layer 30 may be the same as or different from the binder in the cathode active material layer 12 and the anode active material layer 22.

Examples of the oxide-based solid electrolyte may include garnet-type composite oxide, perovskite-type oxide, LISICON-type composite oxide, NASICON-type composite oxide, Li-alumina-type composite oxide, LiPON, and oxide glass. Among these oxide-based solid electrolytes, it is desirable to select an oxide-based solid electrolyte that can be stably used even for lithium metal. For example, it may include $La_{0.51}Li_{0.34}TiO_{2.94}$, $Li_{1.3}Al_{10.3}Ti_{1.7}(PO_4)_3$, $Li_7La_3Zr_2O_{12}$, $50Li_4SiO_4 \cdot 5OLi_3BO_3$, $Li_{2.9}PO_{3.3}N_{0.46}$, $Li_{3.6}Si_{0.6}P_{0.4}O_4$, $Li_{1.07}Al_{0.69}Ti_{1.46}(PO_4)_3$, $Li_{1.5}Al_{10.5}Ge_{1.5}(PO_4)_3$.

## <2. Configuration of Solid Secondary Battery of the Present Embodiment >

However, the primary particles of the amorphous carbon included in the anode active material layer 22 of the all-solid-state secondary battery 1 according to the present embodiment are porous, and a value of an average primary particle diameter (cm) X a nitrogen adsorption specific surface area (cm$^2$/g) is greater than or equal to 5 and less than or equal to 35. Herein, the physical meaning of the index [average primary particle diameter (cm) x nitrogen adsorption specific surface area (cm$^2$/g)] is described. If the primary particle of amorphous carbon is considered to be a true sphere with a diameter a (cm), the surface area (cm$^2$/g) is $6/a\rho$ ($\rho$ is a true density of carbon particles (g/cm$^3$)). When carbon is made porous, the surface area increases and will become a value larger than $6/a\rho$. Therefore, by multiplying the surface area by the primary particle size, this index does not depend on the particle size, and instead indicates an extent to which the surface area is increased due to porosity. That is, as the value of this index increases, the porosity of the amorphous carbon also increases. The value of this index [average primary particle diameter (cm) x nitrogen adsorption specific surface area (cm$^2$/g)] may be greater than or equal to 5 and less than or equal to 35, greater than or equal to 10 and less than or equal to 30, greater than or equal to 13 and less than or equal to 30.

Meanwhile, the average primary particle diameter (cm) of amorphous carbon can be measured using, for example, a laser particle size distribution meter or a transmission electron microscope (TEM). The average primary particle diameter of the amorphous carbon may be greater than or equal to 10 nm and less than or equal to 80 nm, more desirably greater than or equal to 10 nm and less than or equal to 50 nm, and particularly desirably greater than or equal to 10 nm and less than or equal to 40 nm.

Additionally, the nitrogen adsorption specific surface area (cm$^2$/g) can be measured by the nitrogen adsorption method (multipoint method) (JIS K6217-2:2017). Specifically, amorphous carbon such as carbon black, which has been degassed once at high temperature, is cooled to the temperature of liquid nitrogen under vacuum. Then, nitrogen gas is introduced, and after reaching an equilibrium state, the nitrogen atmospheric pressure and nitrogen adsorption amount are measured. This measurement is performed multiple times at a relative pressure [nitrogen atmospheric pressure/saturated vapor pressure] in the range of around 0.05 to 0.35, the obtained values of nitrogen atmospheric pressure and nitrogen adsorption amount are applied to the BET (Brunauer-Emmett-Teller) Equation, thereby, and the single molecule adsorption amount (volume of nitrogen gas adsorbed on the first layer of the sample surface) is obtained. The value of the nitrogen adsorption specific surface area can be calculated from this single molecule adsorption amount and sample weight.

The amorphous carbon is desirably, for example, obtained using carbon black having an average primary particle diameter of greater than or equal to 10 nm and less than or equal to 80 nm and an aggregate diameter of greater than or equal to 50 nm and less than or equal to 300 nm as a raw material, and making carbon black porous. Methods for making the pores may include, for example, a gas activation method or a chemical activation method. On the other hand, before and after this pore-making process, the average primary particle diameter and aggregate diameter of amorphous carbon do not change.

The aggregate diameter of amorphous carbon can be measured using, for example, TEM. The aggregate diameter of the amorphous carbon is desirably greater than or equal to 50 nm and less than or equal to 300 nm, and particularly desirably greater than or equal to 60 nm and less than or equal to 250 nm.

In addition, the oil absorption amount of the amorphous carbon is desirably greater than or equal to 200 ml/100 g and less than or equal to 350 ml/100 g, and more desirably greater than or equal to 200 ml/100 g and less than or equal to 340 ml/100 g.

Herein, the oil absorption amount of amorphous carbon refers to an oil absorption amount of one type of amorphous carbon when there is one type of amorphous carbon. In addition, when there are multiple types of amorphous carbon, it is an oil absorption amount of each of the multiple types of amorphous carbon.

The oil absorption amount of amorphous carbon can be calculated by measuring the oil absorption amount based on JIS K6217-4:2017. Specifically, oil (dibutyl phthalate (DBP) or paraffin oil) is titrated with a constant-speed burette to the sample being mixed by the rotary blade. As oil is added, the mixture changes from a free-flowing powder to a slightly viscous mass. The end point of this measurement is when the torque generated by the change in viscosity characteristics reaches the set value or reaches a certain ratio of the maximum torque obtained from the torque curve.

The oil absorption amount (ml/100 g) can be obtained by dividing the oil volume (ml) at the end point by the sample mass (g) and multiplying it by 100.

Additionally, the total pore volume of the amorphous carbon is desirably greater than or equal to 0.5 ml/g and less than or equal to 3 ml/g, and more desirably greater than or equal to 0.55 ml/g and less than or equal to 2.5 ml/g. It is particularly desirable that it is greater than or equal to 0.55 ml/g and less than or equal to 2.0 ml/g.

Herein, the total pore volume of the amorphous carbon can be measured together with the measurement of the nitrogen adsorption specific surface area described above. At a pressure near the saturated vapor pressure, a capillary condensation phenomenon of the adsorbed gas occurs within the pores, and the adsorbed gas exists in a liquid state within most of the pores. Therefore, the aforementioned nitrogen atmospheric pressure and nitrogen adsorption amount are measured near the saturated vapor pressure, and the total pore volume can be obtained by converting the amount of adsorbed gas into liquid.

Additionally, regarding the oil absorption amount and total pore volume of amorphous carbon, it is more desirable that both of these satisfy the above range.

<3. Method of Manufacturing Solid Secondary Battery According to the Present Embodiment >

Next, the method of manufacturing the all-solid-state secondary battery 1 according to the present embodiment will be described. The all-solid-state secondary battery 1 according to this embodiment can be manufactured by manufacturing the anode layer 10, the cathode layer 20, and the solid electrolyte layer 30, and then stacking each of the above layers.

(3-1. Manufacturing Process of Cathode Layer)

First, the materials constituting the cathode active material layer 12 (cathode active material, binder, etc.) are added to a nonpolar solvent to prepare a slurry (the slurry may be a paste. The same applies to other slurries). Then, the obtained slurry is applied on the cathode current collector 11 and dried. Then, the cathode layer 10 is manufactured by pressurizing the obtained laminate (for example, performing pressurization using hydrostatic pressure). The pressurization process may be omitted. The cathode layer 10 may be produced by pressing/compressing a mixture of materials constituting the cathode active material layer 12 in a pellet form, or stretching it in a sheet form. When the cathode layer 10 is produced by these methods, the cathode current collector 11 may be compressed on the produced pellet or sheet.

(3-2. Manufacturing Process of Anode Layer)

First, a slurry is prepared by adding the anode active material layer materials (amorphous carbon, first element, second element, binder, etc.) constituting the anode active material layer 22 to a polar solvent or a nonpolar solvent. Then, the obtained slurry is applied on the anode current collector 21 and dried. At this time, it is desirable to apply the anode active material layer 22 formed on the anode current collector so that its dry weight is in the range of 0.3 mg to 2 mg per 1 cm$^2$.

Then, the anode layer 20 is manufactured by pressurizing the obtained laminate (for example, performing pressurization using hydrostatic pressure). The pressurization process may be omitted.

(3-3. Manufacturing Process of Solid Electrolyte Layer)

The solid electrolyte layer 30 may be made of a solid electrolyte formed from a sulfide-based solid electrolyte material.

First, the starting materials are treated by a melt quenching method or a mechanical milling method.

For example, when the melt quenching method is used, the starting materials (for example, $Li_2S$, $P_2S_5$, and the like) are mixed in each predetermined amount and pelletized and then, reacted at a predetermined reaction temperature under vacuum and quenched, preparing a sulfide-based solid electrolyte material. On the other hand, the reaction temperature of the $Li_2S$ and $P_2S_5$ mixture may be desirably 400 °C to 1000 °C, and more desirably 800 °C to 900 °C. In addition, reaction time may be desirably 0.1 hour to 12 hours, and more desirably 1 hour to 12 hours. Furthermore, a quenching temperature of the reactant may be generally at less than or equal to 10 °C, and desirably less than or equal to 0 °C, and a quenching rate may be generally 1 °C to 10,000 °C, and desirably 1 °C to 1,000 °C.

In addition, when the mechanical milling method is used, the starting materials (for example, $Li_2S$, $P_2S_5$, and the like) are stirred and reacted by using a ball mill and the like, preparing the sulfide-based solid electrolyte material. On the other hand, the mechanical milling method is not particularly limited with respect to a stirring speed and stirring time, but as the stirring speed is fast, the sulfide-based solid electrolyte material may be fast produced, and as the stirring becomes longer, a conversion rate of the raw material to the sulfide-based solid electrolyte material may be increased.

Thereafter, the mixed raw material obtained in the melt quenching method or the mechanical milling method is heat-treated at a predetermined temperature and pulverized, preparing a particle-shaped solid electrolyte. When the solid electrolyte has a glass transition point, it may be changed from amorphous to crystalline through the heat treatment.

Subsequently, the solid electrolyte obtained in the aforementioned method may be formed into the solid electrolyte layer 30 in a known film-forming method, for example, an aerosol deposition method, a cold spray method, a sputtering method, and the like. On the other hand, the solid electrolyte layer 30 may be produced by pressing solid electrolyte particles group. In addition, the solid electrolyte layer 30 may be formed by mixing the solid electrolyte, a solvent, and a binder and then, coating and drying the mixture.

(3-4. Assembly Process of Solid Secondary Battery)

The cathode layer 10, the anode layer 20, and the solid electrolyte layer 30 formed in the above method are laminated and sandwiched together and then, and pressed (for example, pressed with a hydrostatic pressure), producing the all-solid-state secondary battery 1 according to the present embodiment.

When operating the all-solid-state battery manufactured by the above method, the operation may be performed while pressure is applied to the all-solid-state battery.

The pressure may be greater than or equal to 0.5 MPa and less than or equal to 10 MPa. Additionally, pressure may be applied by sandwiching the all-solid-state battery between two hard plates made of stainless steel, brass, aluminum, or glass, and tightening the space between the two sheets with screws.

<4. Charging Method of Solid Secondary Battery >

Next, a method of charging the all-solid-state secondary battery 1 according to the present embodiment will be described. In the present embodiment, as described above, the all-solid-state secondary battery 1 is charged beyond the charging capacity of the anode active material layer 22. In other words, the anode active material layer 22 is overcharged. At the beginning of charging, lithium is intercalated in the anode active material layer 22. When charging exceeds the charging capacity of the anode active material layer 22, for example, as shown in FIG. 3, the rear side of the anode active material layer 22, that is, the anode current collector 21 and the anode active material layer 22, lithium precipitates, and this lithium forms a metal layer 23 that did not exist at the time of manufacture. During discharge, lithium in the anode active material layer 22 and the metal layer 23 is ionized and moves toward the cathode layer 10.

Meanwhile, the charging amount is desirably set to a value in the range of 2 and 100 times, and more desirably in the range of 4 and 100 times the charging capacity of the anode active material layer 22.

<5. Effects of the Present Embodiment >

According to the all-solid-state secondary battery 1 constructed as described above, because the anode active material layer 22 includes the amorphous carbon and the first element as an anode active material, wherein lithium is used as the anode active material, the battery, when charged beyond the charging capacity, may be suppressed from precipitation of the lithium on the surface of the anode active material layer 22 at the side of the solid electrolyte layer 30.

In addition, the anode active material layer 22 may be overcharged, for example, as shown as the metal layer 23 in FIG. 3 or 4, to precipitate the lithium in layers. As a result, the all-solid-state secondary battery 1 may be more suppressed from an increase in pressure due to the charging and discharging than a case of not precipitating the lithium in layers. In addition, compared with the case of not precipitating lithium in layers, the all-solid-state secondary battery 1 may be suppressed from generation of voids inside by the charging and discharging.

For the reason described above, the all-solid-state secondary battery 1 according to the embodiment may be suppressed from the precipitation and growth of dendrites. Accordingly, the all-solid-state secondary battery may be suppressed rom a short circuit and capacity deterioration and furthermore, exhibit improved characteristics.

Because the all-solid-state secondary battery 1 according to the embodiment further contains the aforementioned second element in the anode active material layer 22, as aforementioned, the precipitation or growth of dendrites may not only be suppressed, but also the content of noble metals used as the first element in the anode active material layer 22 may be reduced. As a result, a cost of manufacturing the all-solid-state secondary battery 1 may be reduced.

On the other hand, in the all-solid-state secondary battery 1 according to the embodiment, because the metal layer 23 may not be formed in advance before the first charge, the manufacturing cost may be much more reduced than the all-solid-state secondary battery 1 having the metal layer 23 formed in advance according to the second embodiment, which will be described later.

<6. Another Embodiment>

<6-1. Configuration of Solid Secondary Battery According to the Second Embodiment >

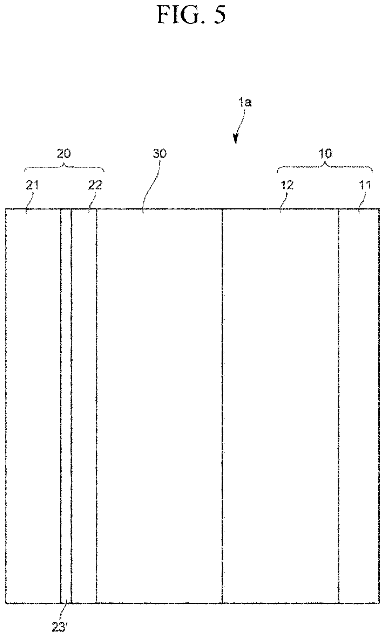

Referring to FIG. 5, the configuration of the all-solid-state secondary battery 1a according to the second embodiment will be described. As shown in FIG. 5, the all-solid-state secondary battery 1a includes a cathode layer 10, an anode layer 20, and a solid electrolyte layer 30. The configurations of the cathode layer 10 and solid electrolyte layer 30 are the same as those of the first embodiment.

(6-1-1. Configuration of Anode Layer)

The anode layer 20 includes an anode current collector 21, an anode active material layer 22, and a metal layer 23. That is, in the first embodiment, overcharging of the anode active material layer 22 forms a metal layer 23 that did not exist before the initial charging between the anode current collector 21 and the anode active material layer 22. On the other hand, in the second embodiment, as shown in FIG. 5, the metal layer 23' is formed between the anode current collector 21 and the anode active material layer 22 in advance (i.e., before the first charge).
Even in this case, similar to the first embodiment described above, the metal layer 23 may be further formed inside the anode active material layer 22 by precipitated lithium.
The configuration of the anode current collector 21 and the anode active material layer 22 is the same as that of the first embodiment. The metal layers 23 and 23' include lithium or a lithium alloy. That is, the metal layers 23 and 23' functions as a lithium reservoir. Examples of the lithium alloy may include Li-Al alloy, Li-Sn alloy, Li-In alloy, Li-Ag alloy, Li-Au alloy, Li-Zn alloy, Li-Ge alloy, and Li-Si alloy. The metal layers 23 and·23' may be composed of any one of these alloys or lithium, or may be composed of multiple types of alloys. In the second embodiment, the metal layers 23·and 23' serve as a reservoir for lithium, and thus the characteristics of the all-solid-state secondary battery·1 are further improved.
Herein, a thickness of the metal layer 23' is not particularly limited, but is desirably greater than or equal to 1 $\mu$m and less than or equal to 200 $\mu$m. If the thickness of the metal layer 23' is less than 1 $\mu$m, the reservoir function of the metal layer 23' cannot be sufficiently exercised. If the thickness of the metal layer 23' exceeds 200 $\mu$m, the mass and volume of the all-solid-state secondary battery 1 may increase, and the characteristics may actually deteriorate. For this reason, the metal layer 23' is made of, for example, a metal foil having the above thickness.

<6-2. Method for Manufacturing Solid Secondary Battery according to Second Embodiment >

A method of manufacturing the all-solid-state secondary battery 1 according to the second embodiment will be described. The cathode layer 10 and the solid electrolyte layer 30 are manufactured in the same manner as in the first embodiment.

(6-2-1. Manufacturing Process of Anode Layer)

In the second embodiment, the anode active material layer 22 is disposed on the metal layer 23'. The metal layer 23' is often substantially a metal foil. Because it is difficult to form the anode active material layer 22 on lithium foil or lithium alloy foil, the anode layer 20 may be produced by the following method.
First, the anode active material layer 22 is formed on any substrate (for example, an Ni plate) in the same manner as in the first embodiment. Specifically, materials constituting the anode active material layer 22 are added to a solvent, preparing slurry. Subsequently, the obtained slurry is coated on the substrate and dried. Then, the obtained laminate is pressurized (for example, pressurized with a hydrostatic pressure) to form the anode active material layer 22. The pressurization process may be omitted.
Subsequently, on the anode active material layer 22, the solid electrolyte layer 30 is formed, and the obtained laminate is pressurized (for example, pressurized with a hydrostatic pressure). Then, the substate is removed. Accordingly, a laminate of the anode active material layer 22 and the solid electrolyte layer 30 is obtained.
Subsequently, on the anode current collector 21, a metal foil constituting the metal layer 23', the laminate of the anode active material layer 22 and the solid electrolyte layer 30, and the cathode layer 10 are sequentially stacked. Then, the obtained stack is pressurized (for example, pressurized with a hydrostatic pressure), manufacturing an all-solid-state secondary battery 1a.
When operating the all-solid-state battery manufactured by the above method, the operation may be performed while pressure is applied to the all-solid-state battery.
The pressure may be greater than or equal to 0.5 MPa and less than or equal to 10 MPa. Additionally, pressure may be applied by sandwiching the all-solid-state battery between two hard plates made of stainless steel, brass, aluminum, or glass, and tightening the space between the two sheets with screws.

<6-3. Charging Method of Solid Secondary Battery according to Second Embodiment >

The all-solid-state secondary battery 1a according to the present embodiment is charged in the same charging method as in the first embodiment. In other words, the all-solid-state secondary battery 1a is charged beyond charging capacity of the anode active material layer 22. In other words, the anode active material layer 22 is overcharged. At the beginning of the charging, lithium is intercalated in the anode active material layer 22. If the charging exceeds the capacity of the anode active material layer 22, the lithium is precipitated in the metal layer 23' (or on the metal layer 23'). During the discharging, the lithium is ionized in the anode active material layer 22 and the metal layer 23' (or the metal layer 23) and then, moves toward the cathode layer 10.

<6-4. Effects of Second Embodiment >

The all-solid-state secondary battery 1a constructed in this way like the aforementioned embodiment may use the lithium as an anode active material. In addition, the anode active material layer 22 may coat the metal layer 23 to function as a protective layer of the metal layer 23 and to suppress precipitation and growth of dendrites. Accordingly, the all-solid-state secondary battery 1a may be suppressed from a short circuit and capacity deterioration, and furthermore, characteristics of the all-solid-state secondary battery 1a may be improved.

<6-5. Third Embodiment>

In the first embodiment and the second embodiment, it has been described that the solid secondary battery is an all-solid-state secondary battery, but the anode material for a secondary battery and the anode layer for a secondary battery according to the present invention may be applied to any solid secondary battery including a solid anode layer and a solid solid electrolyte layer. For example, the anode material for a secondary battery and the anode layer for a secondary battery according to the present invention may be applied to a solid secondary battery in which a cathode layer is partially or all not solid or a solid secondary battery further containing an electrolyte solution in addition to a solid electrolyte.

As mentioned above, although this invention was described in detail regarding embodiments, referring an accompanying drawing, the present disclosure is not limited thereto. Those of ordinary skill in the art to which the present invention pertains may understand that various examples of changes or modifications may be made within the scope of the technical idea described in the claims and so these may also be within the technical scope of the present invention.

## DETAILED DESCRIPTION OF THE EMBODIMENTS

Examples

Hereinafter, the anode active material layer material according to the present invention, the anode active material layer prepared using this anode active material layer material, and the all-solid-state secondary battery including this anode active material layer will be described in more detail through examples, but the present invention is not limited to these examples.

(1. Description of each Example and Comparative Example)

<Example 1>

In the present example embodiment, an all-solid-state anode material for a secondary battery was prepared in the following method by using silver and porous carbon black as an anode active material.

(1-1. Manufacturing of Anode Layer)

In the present example embodiment, silver particles with an average particle diameter of about 60 nm and porous carbon black CB-1, which was made to be porous to a nitrogen specific surface area of 461 $m^2$/g by using furnace black particles CB-0 with an average primary particle diameter of 38 nm, an aggregate diameter of 250 nm, and a nitrogen adsorption specific surface area of 54 $m^2$/g as a starting material, were used. The average primary particle diameter of the carbon black was estimated by measuring particle diameters of 1000 or more primary particles of the carbon black with TEM and calculating an average value thereof. In addition, the average aggregate diameter was obtained by taking an image of 1000 or more aggregates with TEM to obtain each area of the aggregates and calculate a circle-equivalent diameter from the area. The porosity was carried out by adding the furnace black particles CB-0 to a batch reactor and heat-treating them at 900 °C under the presence of aqueous vapor to secure the predetermined specific surface area.

After the porosity treatment, an oil absorption amount of the amorphous carbon was measured by using an oil absorption amount measurement according to JIS K6217-4:2017. Specifically, the oil absorption amount was measured by titrating oil with a constant-speed burette to a sample, which was being mixed by a rotary blade, to examine the mixture changed from a free flowing powder to a slightly viscous mass and thus check when a torque caused by viscosity characteristic changes reached a set value or when a maximum torque obtained from a torque curve reached a predetermined ratio, which was used as an end point for completing the measurement. At this end point, the oil absorption amount (ml/100 g) was obtained by dividing an oil volume (ml) by an oil mass (g) and then, multiplying 100.

The nitrogen adsorption specific surface area of the amorphous carbon was measured by a nitrogen adsorption method (a multipoint method ) according to JIS K6217-2:2017. The amorphous carbon, which was weighed in advance, was once degassed under vacuum at 150 °C and cooled to a liquid nitrogen temperature. Herein, nitrogen gas was introduced thereinto to set a relative pressure [nitrogen atmosphere pressure/saturation vapor pressure] in a range of 0.05 to 0.35, wherein the nitrogen atmosphere pressure and a nitrogen adsorption amount in equilibrium were applied to BET Equation to obtain its molecular adsorption amount. This monomolecular adsorption amount and the sample weight were used to calculate the nitrogen adsorption specific surface area ($cm^2/g$). In addition, the total pore volume was calculated by performing the measurement near a saturated vapor pressure, converting an adsorbed gas amount obtained at this point into a liquid to obtain a volume (ml), and dividing the volume (ml) by the sample weight (g).

After adding 12 g of CB-1 and 4 g of the silver particles to a container, an NMP solution including 8 wt% of a binder (#9300, Kureha Corp.) was little by little added thereto to have 7 wt% of a dry weight of the binder based on a total dry weight of the carbon black, the silver, and the binder, while stirring, preparing slurry for an anode active material layer. The slurry for an anode active material layer was coated on a 10 micron-thick stainless foil by a blade coater and dried at 80 °C in the air for about 20 minutes and then, vacuum-dried at 100 °C for about 12 hours to form an anode. The anode layer had initial charging capacity of about 0.5 mAh/$cm^2$.

(1-2. Manufacturing of Cathode Layer)

A cathode active material of $LiNi_{0.8}Co_{0.15}Mn_{0.05}O_2$(NCM) was coated with $Li_2O\text{-}ZrO_2$ in a method described in non-patent literature (Naoki Suzuki et al., "Synthesis and Electrochemical Properties of 14--type Li1,2xZn1-xPS4 Solid Electrolyte", published on March 9, 2018 in Chemistry of Materials, No. 30 2236 to 2244 (2018)). $Li_6PS_5Cl$, an argyrodite type crystal, as a solid electrolyte, carbon nanofiber (CNF) as a conductive agent, and TEFLON (tetrafluoroethylene) as a binder were used, wherein the cathode active material: the solid electrolyte : CNF : the TEFLON (tetrafluoroethylene) binder were mixed in a mass ratio of =83:13.5:2:1.5 to form a sheet, which was stretched to prepare a cathode active material layer sheet. In addition, this cathode active material layer sheet was formed to have about 2 $cm^2$ and then, compressed onto an 18 $\mu$m-thick aluminum foil as a cathode current collector to form a cathode layer. The cathode layer had initial charging capacity (1st cycle charging capacity) of about 7 mAh/$cm^2$ for 4.25 V charging. Accordingly, the anode layer capacity/the cathode layer capacity were about 0.07, which satisfied the requirements of Equation 1 described above.

(1-3. Formation of Solid Electrolyte Layer on Anode Active Material Layer)

Subsequently, a solid electrolyte layer was formed on the anode active material layer in the following method. To the $Li_6PS_5Cl$ solid electrolyte, 1 wt% of a binder was added and then, stirred, while adding xylene and diethylbenzene, preparing slurry. This slurry was coated on a PET film with a blade coater and dried in the air at 40 °C and then, vacuum-dried at 40 °C for 12 hours. The obtained product was placed on the aforementioned anode with the anode active material layer and the solid electrolyte layer in contact with each other and then, subjected to a hydrostatic pressure treatment at 50 MPa. After the treatment, the PET film was removed to form the solid electrolyte layer on the anode active material layer. The solid electrolyte layer had a thickness of about 40 $\mu$m.

(1-4. Manufacturing of All-solid-state Secondary Battery Cell)

An all-solid-state battery cell was manufactured by overlapping the anode layer with the solid electrolyte layer on the cathode layer and the anode active material layer manufactured in the aforementioned method to contact the solid electrolyte layer with the cathode layer and then, sealing them in a laminate film under vacuum. Each portion of the cathode layer and the anode layer came out of the laminate film so as not to break the vacuum of the battery cell and then, were respectively used as terminals of the cathode layer and the anode layer.

This all-solid-state battery cell was subjected to a hydrostatic pressure treatment at 490 MPa. Through this hydrostatic pressure treatment, characteristics of the battery cell were significantly improved.

(1-5. Evaluation of All-solid-state Secondary Battery Cells)

The all solid lithium battery cell manufactured in this way were evaluated with respect to charge and discharge characteristics under the following conditions.

The charge and discharge characteristics were measured by placing the all-solid-state battery cell in a thermostat at 45 °C. The cell was charged to a battery voltage of 4.25 V at a constant current of 2.2 mA/cm$^2$ and to a current of 0.66 mA at a constant voltage of 4.25 V. Then, the cell was discharged at a constant current of 2.2 mA/cm$^2$ to a battery voltage of 2.5 V. This charge and discharge was repeated 400 times or until a short circuit occurred. When ten battery cells were manufactured by using the same materials through the same procedures and then, measured, none of them short-circuited to 400 times (Table 1).

<Comparative Example 1>

Ten all-solid-state battery cells were manufactured in the same manner as in Example 1 by using non-porous carbon black (a raw material of porous carbon black (CB-0) of Example 1) as the carbon black and also, evaluated in the same manner as in Example 1. When the cells were charged and discharged to 400 times, five cells of them short-circuited (Table 1).

<Example 2>

Ten all-solid-state battery cells were manufactured in the same manner as in Example 1 except that the thickness of the solid electrolyte sheet was changed to about 30 μm to easily short-circuit the cells and then, charged and discharged to 200 times under the same conditions as in Example 1 to count the number of short-circuited cells during the charge and discharge. There were none of them short-circuited to the 200 times during the charge and discharge (Table 1).

<Example 3>

Ten all-solid-state battery cells were manufactured in the same manner as in Example 1 except that the mixing ratio of CB-1 used in Example 1 and the silver particles was changed to 1:1 or 6:1 and then, measured through the same procedure as in Example 2. The results are shown in Table 1.

<Comparative Example 2>

Ten all-solid-state battery cells were manufactured in the same manner as in Example 2 except that the mixing ratio of CB-0 used in Comparative Example 1 and the silver particles was changed to 1:1, 3:1, or 6:1 and then, measured through the same procedure as in Example 2. The cells all short-circuited during the charge and discharge to 200 times. The results are shown in Table 1.

<Example 4>

Ten all-solid-state battery cells were manufactured in the same manner as in Example 2 except that the heat treatment time was changed in making CB-0 porous, and the nitrogen adsorption specific surface area was changed to 207 m$^2$/g (CB-2), 673 m$^2$/g (CB-3), or 838 m$^2$/g (CB-4) and then, measured through the same procedure as in Example 2. Because the parent CB-0 was the same, there was no change in an average diameter of the primary particles and an aggregate diameter. The results are shown in Table 1.

<Example 5>

Ten all-solid-state battery cells were manufactured in the same manner as in Example 2 except that either one of BP-2000 and PBX-51 manufactured by CABOT was used as the porous carbon black and then, measured through the same procedure as in Example 2. Each average primary particle diameter, aggregate diameter, oil absorption amount, and total pore volume were obtained in the same manner as in Example 1. The results are shown in Table 1.

<Example 6>

CB-3 used in Example 4 was used as the porous carbon black. In addition, ten all-solid-state battery cells were manufactured in the same manner as in Example 1 except that zinc particles with an average particle diameter of about 80 nm were used instead of the silver particles. The cells were charged and discharged to 100 times under the same conditions as in Example 1 to evaluate the number of cells short-circuited during the charge and discharge. There were three cells short-circuited during the charge and discharge to the 100 times (Table 1).

<Comparative Example 3>

Ten all-solid-state battery cells were manufactured in the same manner as in Example 6 except that CB-0 was used as the carbon black and then, measured in the same manner as in Example 6. There were nine cells short-circuited during the charge and discharge to the 100 times (Table 1).

<Example 7>

In order to more easily short-circuit cells, the thickness of the solid electrolyte sheet was changed to about 25 $\mu$m, and the mixing weight ratio of CB-1 and the silver particles was changed to 6:1. Except for this, ten all-solid-state battery cells were manufactured in the same manner as in Example 1 and then, measured in the same manner as in Example 2. There were nine cells short-circuited during the charge and discharge to the 200 times (Table 1).

<Example 8>

Ten all-solid-state battery cells were manufactured in the same manner as in Example 7 except that nickel particles with a particle diameter of about 70 nm were prepared, and the nickel particles, CB-1, and the silver particles were mixed in a weight ratio of 3:6:1 to prepare slurry and then, measured in the same manner as in Example 2. There was one cell short-circuited during the charge and discharge to the 200 times (Table 1).

<Example 9>

Ten all-solid-state battery cells were manufactured in the same manner as in Example 8 except that iron particles with a particle diameter of about 65 to 75 nm were used instead of the nickel particles of Example 5. There were two cells short-circuited during the charge and discharge to the 200 times (Table 1).

<Example 10>

Ten all-solid-state battery cells were manufactured in the same manner as in Example 8 except that iron particles with a particle diameter of about 800 nm were used instead of the iron particles of Example 9. There were two cells short-circuited during the charge and discharge to the 200 times (Table 1).

<Example 11>

Ten all-solid-state battery cells were manufactured in the same manner as in Example 8 except that the mixing weight ratio of the nickel particles and the carbon black was changed to 1:6 and 5:6. There were respectively two and four cells short-circuited during the charge and discharge to the 200 times (Table 1).

(Table 1)

| | Thickness of solid electrolyte sheet (μm) | Carbon | Nitrogen adsorption specific surface area (m²/g) | Average primary particle diameter (nm) | Nitrogen adsorption specific surface area (cm²/g) ×Average primary particle diameter (cm) | Aggregate diameter (nm) | First element/ particle diameter (nm) | Second element/ particle diameter (nm) | Weight ratio of carbon, first element, and second element | Number of cycles | Number of shorted cells (out of 10) | effect |
|---|---|---|---|---|---|---|---|---|---|---|---|---|
| Ex. 1 | 40 | CB-1 | 461 | 38 | 17.5 | 250 | Silver 160 nm | - | 3:1:0 | 400 | 0 | ○ |
| Ex. 2 | 30 | CB-1 | 461 | 38 | 17.5 | 250 | Silver 160 nm | - | 3:1:0 | 200 | 0 | ○ |
| Ex. 3 | 30 | CB-1 | 461 | 38 | 17.5 | 250 | silver/ 60 nm | - | 1:1:0 | 200 | 0 | ○ |
| Ex. 3 | 30 | CB-1 | 461 | 38 | 17.5 | 250 | Silver 160 nm | - | 6:1:0 | 200 | 1 | ○ |
| Ex. 4 | 30 | CB-2 | 207 | 38 | 7.9 | 250 | Silver 160 nm | - | 3:1:0 | 200 | 0 | ○ |
| Ex. 4 | 30 | CB-3 | 673 | 38 | 25.6 | 250 | Silver /60 nm | - | 3:1:0 | 200 | 0 | ○ |
| Ex. 4 | 30 | CB-4 | 838 | 38 | 31.8 | 250 | Silver /60 nm | - | 3:1:0 | 200 | 3 | ○ |
| Ex. 5 | 30 | BP-2000 | 1460 | 15 | 21.9 | 84 | Silver 160 nm | - | 3:1:0 | 200 | 3 | ○ |
| Ex. 5 | 30 | PBX -51 | 1350 | 14 | 18.9 | 64 | Silver /60 nm | - | 3:1:0 | 200 | 2 | ○ |
| Ex. 6 | 40 | CB-3 | 673 | 38 | 25.6 | 250 | Zince /80 nm | - | 3:1:0 | 100 | 3 | ○ |
| Ex. 7 | 25 | CB-1 | 461 | 38 | 17.5 | 250 | Silver /60 nm | - | 6:1:0 | 200 | 7 | - |
| Ex. 8 | 25 | CB-1 | 461 | 38 | 17.5 | 250 | Silver 160 nm | Ni/ 70 nm | 6:1:3 | 200 | 1 | ○ |

| | Thick ness of solid electr olyte sheet (μm) | Carb on | Nitrog en adsor ption specif ic surfac e area (m²/g) | Aver age prim ary parti cle diam eter (nm) | Nitrogen adsorptio n specific surface area (cm²/g) ×Average primary particle diameter (cm) | Aggre gate diame ter (nm) | First elemen t/ particl e diamet er (nm) | Second elemen t/ particl e diamet er (nm) | Weight ratio of carbon, first element , and second element | Numb er of cycles | Numb er of shorte d cells (out of 10) | effe ct |
|---|---|---|---|---|---|---|---|---|---|---|---|---|
| Ex. 9 | 25 | CB-1 | 461 | 38 | 17.5 | 250 | Silver 160 nm | Fe/65 to 75 nm | 6:1:3 | 200 | 2 | ○ |
| Ex. 10 | 25 | CB-1 | 461 | 38 | 17.5 | 250 | Silver 160 nm | Fe/ 800 nm | 6:1:3 | 200 | 2 | ○ |
| Ex. 11 | 25 | CB-1 | 461 | 38 | 17.5 | 250 | Silver 160 nm | Ni/70 nm | 6:1:1 | 200 | 2 | ○ |
| Ex. 11 | 25 | CB-1 | 461 | 38 | 17.5 | 250 | Silver 160 nm | Ni/ 70 nm | 6:1:5 | 200 | 4 | ○ |
| Comp . Ex. 1 | 40 | CB-0 | 54 | 38 | 2.1 | 250 | Silver /60 nm | - | 3:1:0 | 400 | 5 | - |
| Comp . Ex. 2 | 30 | CB-0 | 54 | 38 | 2.1 | 250 | Silver /60nm | - | 1:1:0 | 200 | 10 | - |
| Comp . Ex. 2 | 30 | CB-0 | 54 | 38 | 2.1 | 250 | Silver /60 nm | - | 3:1:0 | 200 | 10 | - |
| Comp . Ex. 2 | 30 | CB-0 | 54 | 38 | 2.1 | 250 | Silver /60 nm | - | 6:1:0 | 200 | 10 | - |
| Comp . Ex. 3 | 40 | CB-0 | 54 | 38 | 2.1 | 250 | Zinc /80 nm | - | 3:1:0 | 100 | 9 | - |

(2. Evaluation of Results)

Referring to the results of Example 1 and Comparative Example 1, the case of using porous carbon black having a value of an average primary particle diameter (cm) x a nitrogen adsorption specific surface area (cm$^2$/g) within a range of greater than or equal to 5 and less than or equal to 35 as an all-solid-state anode material for a secondary battery was more suppressed from a short-circuit of an all-solid-state secondary battery cell than a conventional case.

In addition, referring to the results of Examples 2 and 3 and Comparative Example 2, any case of using the porous carbon black and silver particles in any weight ratio of 1:1, 3:1, and 6:1 was suppressed from a short-circuit of an all-solid-state secondary battery cell due to the porous carbon black. Referring to the results, regardless of a content ratio of the amorphous carbon and the first element, the short-circuit suppression effect was achieved. In addition, because gold, platinum, and palladium had similar properties to silver, even if the gold, platinum, and palladium was used as the first element, the same result may be safely assumed to be obtained. Furthermore, referring to Example 6, even if the first element was zinc, the effect was obtained.

In addition, referring to Example 5, this short circuit suppression effect was obtained from the porous carbon black even with a primary particle diameter of 10 nm and an aggregate diameter of 60 to 80 nm.

Furthermore, Example 7 seemed to exhibit many short circuits at first glance but was more suppressed from the short circuits than Comparative Example 2, even if the solid electrolyte layer had a smaller thickness by 5 $\mu$m than Comparative Example 2. In addition, Examples 7 to 9 were much more suppressed from short circuits by adding the second element such as iron or nickel particles to each anode layer. This effect was obtained even if the porous carbon black and the added particles had any weight ratio of 6:1, 6:3, and 6:5.

Although the embodiments have been described in detail above, the scope of rights is not limited thereto, and various modifications and improvements made by those skilled in the art using the basic concepts defined in the following claims also fall within the scope of rights.

1, 1a    all-solid-state secondary battery
10       cathode layer
11       cathode current collector
12       cathode active material layer
20       anode layer
21       anode current collector
22       anode active material layer
23       metal layer
24       thin film
30       solid electrolyte layer

**Claims**

1. An anode material for a secondary battery, comprising

   amorphous carbon and a first element that forms an alloy with lithium by an electrochemical reaction,
   the amorphous carbon is carbon black,
   primary particles of the carbon black are porous, and
   a value of an average primary particle diameter (cm) x a nitrogen adsorption specific surface area (cm$^2$/g) is greater than or equal to 5 and less than or equal to 35.

2. The anode material for a secondary battery as claimed in claim 1, wherein
   the carbon black satisfies the following conditions (1) and (2):

   (1) an average primary particle diameter of the carbon black is greater than or equal to 10 nm and less than or equal to 80 nm, and
   (2) an aggregate diameter of the carbon black is greater than or equal to 50 nm and less than or equal to 300 nm.

3. The anode material for a secondary battery as claimed in claim 1, wherein
   the carbon black satisfies the following conditions (1) to (4):

   (1) an average primary particle diameter of the carbon black is greater than or equal to 10 nm and less than or equal to 80 nm,

(2) an aggregate diameter of the carbon black is greater than or equal to 50 nm and less than or equal to 300 nm,
(3) an oil absorption amount of the carbon black is greater than or equal to 200 ml/100 g and less than or equal to 350 ml/100 g, and
(4) a total pore volume of the carbon black is greater than or equal to 0.5 ml/g and less than or equal to 3 ml/g.

4. The anode material for a secondary battery as claimed in claim 1, wherein
the carbon black is furnace black.

5. The anode material for a secondary battery as claimed in claim 1, wherein
a content of the amorphous carbon is greater than or equal to 50 parts by weight and less than or equal to 85 parts by weight based on a total content, 100 parts by weight of the amorphous carbon and the first element.

6. The anode material for a secondary battery as claimed in claim 1, wherein
the first element includes one or more types selected from silver, zinc, platinum, gold, and palladium.

7. The anode material for a secondary battery as claimed in claim 1, wherein
the first element is silver or zinc.

8. The anode material for a secondary battery as claimed in claim 1, wherein
a second element that does not form an alloy with lithium through an electrochemical reaction is further included.

9. The anode material for a secondary battery as claimed in claim 8, wherein
a content of the second element is greater than or equal to 16 parts by weight and less than or equal to 100 parts by weight based on 100 parts by weight of the amorphous carbon.

10. The anode material for a secondary battery as claimed in claim 8, wherein
the second element is iron or nickel.

11. An anode layer for a secondary battery, comprising
the anode material for a secondary battery as claimed in any one of claim 1 to claim 10.

12. The anode layer for a secondary battery as claimed in claim 11, wherein

a plate-shaped current collector, and
an anode active material layer on the current collector,
wherein the anode active material layer includes the anode material for a secondary battery as claimed in any one of claim 1 to claim 10, and
the anode active material layer is formed on the current collector in a range of 0.3 mg to 2 mg per 1 cm$^2$.

13. An all-solid-state secondary battery, comprising
the anode layer for a secondary battery as claimed in claim 11, a cathode layer, and a solid electrolyte layer between the anode layer and the cathode layer.

14. The all-solid-state secondary battery as claimed in claim 13, wherein

a ratio of an initial charging capacity of the cathode layer and the initial charging capacity of the anode layer satisfies Equation 1:

[Equation 1]

$$0.01 < b/a < 0.5$$

wherein, in Equation 1,
a represents the charging capacity (mAh) of the cathode layer, and b represents the charging capacity (mAh) of the anode layer.

15. A method for charging an all-solid-state secondary battery, comprising charging the all-solid-state secondary battery as claimed in claim 14 to exceed the charging capacity of the anode layer.

16. The method as claimed in claim 15, wherein
the charging is performed in a range of 2 times to 100 times the charging capacity of the anode layer.

FIG. 1

FIG. 2

FIG. 3

# FIG. 4

# FIG. 5

## INTERNATIONAL SEARCH REPORT

| International application No. |
| --- |
| **PCT/KR2022/018989** |

| A. | CLASSIFICATION OF SUBJECT MATTER |
| --- | --- |

**H01M 4/36**(2006.01)i; **H01M 4/38**(2006.01)i; **H01M 4/587**(2010.01)i; **H01M 4/13**(2010.01)i; **H01M 10/052**(2010.01)i; **H01M 10/0562**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); B60L 11/18(2006.01); H01M 10/052(2010.01); H01M 10/40(2006.01); H01M 4/02(2006.01); H01M 4/134(2010.01); H01M 4/38(2006.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 무정형 탄소 (amorphous carbon), 카본 블랙 (carbon black), 합금 (alloy), 금속 (metal), 덴드라이트 (dendrite), 다공성 (porous), 질소 흡착 (nitrogen adsorption), 비표면적 (BET, specific surface)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2008-181881 A (SAMSUNG SDI CO., LTD.) 07 August 2008 (2008-08-07)<br>See abstract; paragraphs [0007]-[0008], [0010], [0013], [0031] and [0062]; and claims 1, 2, 11 and 13. | 1-16 |
| Y | KR 10-2013-0056668 A (SAMSUNG ELECTRONICS CO., LTD. et al.) 30 May 2013 (2013-05-30)<br>See abstract; paragraphs [0023], [0025] and [0167]-[0168]; claims 14-15; and figures 4a-4b. | 1-16 |
| Y | KR 10-2020-0134126 A (SAMSUNG ELECTRONICS CO., LTD.) 01 December 2020 (2020-12-01)<br>See abstract; paragraphs [0087]-[0091] and [0111]-[0114]; claims 1, 15 and 24; and figure 1. | 13-16 |
| A | JP 10-321225 A (HITACHI LTD.) 04 December 1998 (1998-12-04)<br>See entire document. | 1-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 March 2023** | **08 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/018989** |

### C. DOCUMENTS CONSIDERED TO BE RELEVANT

| Category* | Citation of document, with indication, where appropriate, of the relevant passages | Relevant to claim No. |
| --- | --- | --- |
| A | JP 11-054155 A (HITACHI LTD.) 26 February 1999 (1999-02-26)<br>    See entire document. | 1-16 |

Form PCT/ISA/210 (second sheet) (July 2022)

**INTERNATIONAL SEARCH REPORT**
**Information on patent family members**

International application No.

**PCT/KR2022/018989**

| Patent document cited in search report | | | Publication date (day/month/year) | Patent family member(s) | | | Publication date (day/month/year) |
|---|---|---|---|---|---|---|---|
| JP | 2008-181881 | A | 07 August 2008 | CN | 101494285 | A | 29 July 2009 |
| | | | | CN | 101494285 | B | 14 November 2012 |
| | | | | JP | 5492380 | B2 | 14 May 2014 |
| | | | | KR | 10-1397019 | B1 | 20 May 2014 |
| | | | | KR | 10-2008-0070492 | A | 30 July 2008 |
| | | | | US | 2008-0182173 | A1 | 31 July 2008 |
| | | | | US | 8642216 | B2 | 04 February 2014 |
| KR | 10-2013-0056668 | A | 30 May 2013 | CN | 103137953 | A | 05 June 2013 |
| | | | | EP | 2597707 | A1 | 29 May 2013 |
| | | | | EP | 2597707 | B1 | 19 December 2018 |
| | | | | JP | 2013-110112 | A | 06 June 2013 |
| | | | | US | 2013-0130115 | A1 | 23 May 2013 |
| KR | 10-2020-0134126 | A | 01 December 2020 | JP | 2020-191202 | A | 26 November 2020 |
| | | | | US | 2020-0373609 | A1 | 26 November 2020 |
| JP | 10-321225 | A | 04 December 1998 | CN | 1170243 | A | 14 January 1998 |
| | | | | CN | 1170243 | C | 14 January 1998 |
| | | | | JP | 3188395 | B2 | 16 July 2001 |
| | | | | KR | 10-1998-0086348 | A | 05 December 1998 |
| | | | | US | 6030726 | A | 29 February 2000 |
| JP | 11-054155 | A | 26 February 1999 | JP | 3200572 | B2 | 20 August 2001 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019096610 A

**Non-patent literature cited in the description**

- **NAOKI SUZUKI et al.** Synthesis and Electrochemical Properties of 14--type Li1,2xZn1-xPS4 Solid Electrolyte. *Chemistry of Materials,* 09 March 2018, 2236-2244